# EUROPÄISCHE PATENTSCHRIFT

(11) **EP 3 715 649 B1**
(45) Veröffentlichungstag und Bekanntmachung des Hinweises auf die Patenterteilung: **18.05.2022**
(21) Anmeldenummer: 20161185.2
(22) Anmeldetag: 05.03.2020
(51) Int. Cl.: F16B 37/00, F16B 31/02, F16B 5/06, E03C 1/04

(54) **VERFAHREN ZUR HERSTELLUNG EINER VERBINDUNGSANORDNUNG SOWIE EINE MUTTER**
METHOD OF MAKING A CONNECTION ASSEMBLY AND NUT
PROCÉDÉ DE FABRICATION D'UN AGENCEMENT DE RACCORDEMENT AINSI QU'ÉCROU

(30) Priorität: 28.03.2019 DE 102019002226; 30.07.2019 DE 102019005355
(43) Veröffentlichungstag der Anmeldung: 30.09.2020
(73) Patentinhaber: Grohe AG, 58653 Hemer (DE)
(72) Erfinder: HIRNER, Ralph, 3830-470 Gaf. de Encarnação (PT)

(56) Entgegenhaltungen:
- WO-A1-2008/026983
- DE-U1- 29 909 714
- US-A- 5 927 917

## Beschreibung

Die Erfindung betrifft ein Verfahren zur Herstellung einer Verbindungsanordnung mit einer Drehmomentbegrenzung sowie eine Mutter. Die Verbindungsanordnung wird insbesondere zur Befestigung von Armaturen im sanitären Bereich eingesetzt, z. B. zur Befestigung von Wasserhähnen an Waschtischen oder Ähnlichem.

Es sind Verbindungsanordnungen bekannt, die eine Mutter mit einem Innengewinde, einen Bolzen mit einem Außengewinde sowie einen Körper mit einer Anschlagfläche und einer Öffnung umfasst. Der Bolzen ist in der Öffnung angeordnet und erstreckt sich ausgehend von dem Körper durch die Anschlagfläche nach außen. Die Mutter erstreckt sich zwischen einem ersten Ende und einem zweiten Ende entlang einer axialen Richtung und weist ausgehend von dem ersten Ende einen hohlzylindrischen ersten Abschnitt mit dem Innengewinde auf.

Der Körper ist insbesondere Bestandteil eines Wasserhahns. Der Bolzen ist in dem Körper fest angeordnet. Es sind nun Wasserhähne bekannt, bei denen sich der Bolzen bis hinein in einen Kunststoffadapter erstreckt, wobei der Bolzen z. B. über ein Metallelement mit Innengewinde, das in dem Kunststoffadapter angeordnet ist, mit dem Kunststoffadapter fest verbunden ist.

Zur Befestigung des Wasserhahns z. B. an einem Waschtisch wird der Wasserhahn an einer Oberseite des Waschtisches angeordnet, wobei sich der Bolzen durch eine Aussparung im Waschtisch hin zu einer Unterseite des Waschtisches erstreckt. Auf der Unterseite wird nun ein Gegenhalter auf dem Bolzen angeordnet und auf dem Bolzen abschließend die Mutter. Über ein Verschrauben der Mutter mit dem Bolzen wird der Gegenhalter gegen die Unterseite des Waschtisches und der Wasserhahn gegen die Oberseite des Waschtisches gepresst, so dass eine Befestigung des Wasserhahns realisiert ist.

Bei der Verschraubung der Mutter wird ein Anzugsdrehmoment über den Bolzen (und das Metallelement) in den Kunststoffkörper eingeleitet. Dabei kann der Kunststoffkörper beschädigt werden, wenn ein zulässiges Anzugsdrehmoment überschritten wird. Aus der US 5 927 917 A ist eine Mutter mit Drehmomentbegrenzung bekannt.

Aufgabe der vorliegenden Erfindung ist es, ein Verfahren zur Herstellung einer Verbindungsanordnung mit einer Drehmomentbegrenzung und eine Mutter bereitzustellen, so dass eine Beschädigung der Armatur und insbesondere eines Kunststoffkörpers der Armatur vermieden werden kann.

Zur Lösung dieser Aufgabe trägt eine Verbindungsanordnung mit den Merkmalen gemäß Patentanspruch 1 sowie eine Mutter mit den Merkmalen gemäß Patentanspruch 6 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und/oder Details aus den Figuren ergänzt werden, wobei weitere Ausführungsvarianten der Erfindung aufgezeigt werden.

Es wird ein Verfahren zur Herstellung einer Verbindungsanordnung mit einer Drehmomentbegrenzung vorgeschlagen. Die Verbindungsanordnung umfasst zumindest eine Mutter mit einem Innengewinde, einen Bolzen mit einem Außengewinde sowie einen Körper mit einer Anschlagfläche und einer Öffnung. Der Bolzen ist in der Öffnung angeordnet und erstreckt sich ausgehend von dem Körper durch die Anschlagfläche nach außen. Die Mutter erstreckt sich zwischen einem ersten Ende und einem zweiten Ende entlang einer axialen Richtung und weist ausgehend von dem ersten Ende einen hohlzylindrischen ersten Abschnitt mit dem Innengewinde auf. An einer zylindrischen Außenumfangsfläche (des ersten Abschnitts) ist mindestens ein, zumindest teilweise (bevorzugt vollständig) entlang einer Umfangsrichtung umlaufendes und sich in einer radialen Richtung erstreckendes (ringförmiges) erstes Anschlagelement angeordnet (das mit der Mutter einteilig ausgeführt ist). Das Verfahren umfasst zumindest die folgenden Schritte:
a) Anordnen der Mutter über das erste Ende auf dem Bolzen und verschrauben hin zur Anschlagfläche auf das Außengewinde mit höchstens einem ersten Drehmoment (z. B. höchstens 10 Newtonmeter, bevorzugt höchstens 5 Newtonmeter) bis zur Kontaktierung des ersten Anschlagelements mit der Anschlagsfläche,
   wobei infolge der Kontaktierung ein zur weiteren Verschraubung erforderliches zweites Drehmoment höher ist als das erste Drehmoment, und wobei, wenn die Mutter mit mindestens dem zweiten Drehmoment weiter verschraubt wird und das zweite Drehmoment höher ist als ein durch das erste Anschlagelement definiertes Grenzdrehmoment
b) Wegbrechen des ersten Anschlagelement von der Außenumfangsfläche.

Das Grenzdrehmoment beträgt insbesondere zwischen 10 und 20 Newtonmeter, bevorzugt zwischen 10 und 15 Newtonmeter.

Das Wegbrechen des ersten Anschlagelements soll eine Einleitung eines zu hohen Anzugsdrehmoment (mit dem die Mutter auf dem Bolzen angeordnet wird) über den Bolzen hin zum Körper verhindern. Insbesondere soll die Einleitung eines zu hohen Anzugsdrehmoments in eine Kunststoffkörper der Sanitärarmatur verhindert werden.

Insbesondere ist der Körper Bestandteil einer Sanitärarmatur bzw. eines Wasserhahns. Der Körper umfasst hier insbesondere mehrerer Komponenten, z. B. einen Kunststoffkörper der Sanitärarmatur, einen Gegenhalter, sowie ggf. eine Anschlagfläche). Der Körper bezeichnet insbesondere eine Gruppe von einzelnen Bauteilen, die insbesondere nur im Rahmen der Herstellung der Verbindungsanordnung miteinander zumindest kraftschlüssig verbunden werden

Insbesondere ist an der Außenumfangsfläche und entlang der axialen Richtung beabstandet von dem ersten Anschlagelement ein zweites Anschlagelement angeordnet. Nach Schritt b) wird in einem Schritt c) die Mutter mit dem ersten Drehmoment weiter auf den Bolzen aufgeschraubt, bis das zweite Anschlagelement die Anschlagfläche kontaktiert.

Insbesondere setzt sich das Verfahren nach Schritt c) fort und setzt (dann) unmittelbar nach Schritt a) ein.

Insbesondere können eine Mehrzahl (bevorzugt drei) von Anschlagelementen entlang der axialen Richtung an der Außenumfangsfläche angeordnet sein. Insbesondere wiederholt sich für jedes Anschlagelement das Verfahren mit den Schritten a) und b).

Mit dem Verfahren kann mit jedem Anschlagelement ein maximal zulässiges Grenzdrehmoment definiert werden, so dass dem die Verbindungsanordnung herstellendem Monteur ein maximales Anzugsdrehmoment angezeigt wird.

Insbesondere wird für jedes Anschlagelement ein anderes Grenzdrehmoment definiert. Z. B. versagt das erste Anschlagelement bei Überschreiten eines Anzugsdrehmoments von 15 Newtonmeter, das zweite Anschlagelement bei Überschreiten von 12 Newtonmeter, das dritte Anschlagelement z. B. wieder bei Überschreiten von 15 Newtonmeter.

Insbesondere kann das Grenzdrehmoment mit jedem weiteren Anschlagelement kontinuierlich ansteigen, abfallen oder sich zwischen vorbestimmten Grenzen (immer wieder) abwechseln.

Insbesondere weichen alle Grenzdrehmomente der Anschlagelemente einer Mutter nur um einen Betrag von höchstens 20 %, bevorzugt von höchstens 10 %, voneinander ab (also bei einem Grenzdrehmoment z. B. des ersten Anschlagelements von 15 Newtonmeter wäre ein höchstes Grenzdrehmoment von ca. 18 Newtonmeter oder ein kleinstes Grenzdrehmoment von 12 Newtonmeter möglich; alternativ könnten die Grenzdrehmomente jeden Betrag zwischen ca. 14 und ca. 17 Newtonmeter aufweisen).

Insbesondere verschiebt sich das erste Ende infolge der Verschraubung über die Öffnung sukzessive in den Körper (also z. B. über die Anschlagfläche hinweg in den Gegenhalter oder sogar weiter bis hin zu einem Kunststoffkörper der Sanitärarmatur) hinein.

Insbesondere weist die Mutter an der Außenumfangsfläche entlang der axialen Richtung beabstandet von dem nächstliegenden Anschlagelement und hin zum zweiten Ende eine Durchmessererweiterung auf, so dass bei Kontaktierung der Anschlagfläche mit der Durchmessererweiterung ein höheres Drehmoment als das Grenzdrehmoment zur weiteren Verschraubung erforderlich ist. Die Durchmessererweiterung stellt insbesondere einen Endanschlag für die Verbindungsanordnung dar, das heißt eine darüberhinausgehende Verschraubung der Mutter ist nicht vorgesehen (nicht möglich).

Es wird weiter eine Mutter mit einem Innengewinde vorgeschlagen, insbesondere zur Durchführung des beschriebenen Verfahrens geeignet ausgeführt. Die Mutter erstreckt sich zwischen einem ersten Ende und einem zweiten Ende entlang einer axialen Richtung und weist ausgehend von dem ersten Ende einen hohlzylindrischen ersten Abschnitt mit dem Innengewinde auf, wobei an einer zylindrischen Außenumfangsfläche (des ersten Abschnitts) mindestens ein, zumindest teilweise entlang einer Umfangsrichtung umlaufendes und sich in einer radialen Richtung erstreckendes erstes Anschlagelement angeordnet ist. Das mindestens eine (erste) Anschlagelement ist so ausgeführt, dass es bei Kontaktieren einer Anschlagfläche und Überschreiten eines Grenzdrehmoments von höchstens 20 Newtonmeter von der Außenumfangfläche abschert.

Das bedeutet mit anderen Worten insbesondere, dass die Mutter mit einer Anschlagfäche ausgeführt ist, die zum gezielten Abscheren bei einem vorgegebenen Grenzdrehmoment abschert. Die Anschlagfäche ist insbesondere als ein Drehmomentsignalgeber eingerichtet. Die Anschlagfäche ist insbesondere so positioniert und/oder dimensioniert, dass diese beim Anschlagen gegen eine anderes Bauteil beim Anziehen der Mutter unter vorgegebenen Lastbedingungen abschert.

Das Grenzdrehmoment beträgt insbesondere zwischen 10 und 20 Newtonmeter, bevorzugt zwischen 10 und 15 Newtonmeter.

Insbesondere wird das Anschlagelement bei einem über die Mutter aufgebrachten Anzugsdrehmoment, wenn dieses das Grenzdrehmoment überschreitet, von der Außenumfangsfläche abgetrennt.

Insbesondere werden die sonstigen Bereiche der Mutter bis zum Abscheren und auch beim Abscheren des Anschlagelements nicht beschädigt.

Insbesondere ist das erste Anschlagelement entlang der axialen Richtung beabstandet von dem ersten Ende angeordnet.

Insbesondere ist an der Außenumfangsfläche und entlang der axialen Richtung beabstandet von dem ersten Anschlagelement ein zweites Anschlagelement angeordnet.

Insbesondere weist die Mutter an der Außenumfangsfläche entlang der axialen Richtung beabstandet von dem nächstliegenden Anschlagelement und hin zum zweiten Ende eine Durchmessererweiterung auf.

Insbesondere erstreckt sich zwischen dem ersten Abschnitt (bzw. der Durchmessererweiterung) und dem zweiten Ende ein Abschnitt, über den ein Anzugsdrehmoment auf die Mutter aufgebracht werden kann.

Es wird eine Verbindungsanordnung mit einer Drehmomentbegrenzung vorgeschlagen, insbesondere ausgeführt zur Durchführung des beschriebenen Verfahrens. Die Verbindungsanordnung umfasst zumindest die beschriebene Mutter mit einem Innengewinde, einen Bolzen mit einem Außengewinde sowie einen Körper mit einer Anschlagfläche und einer Öffnung. Der Bolzen ist in der Öffnung angeordnet und erstreckt sich ausgehend von dem Körper durch die Anschlagfläche nach außen. Die Mutter erstreckt sich zwischen einem ersten Ende und einem zweiten Ende entlang einer axialen Richtung und weist ausgehend von dem ersten Ende einen hohlzylindrischen ersten Abschnitt mit dem Innengewinde aufweist, wobei an einer zylindrischen Außenumfangsfläche (des ersten Abschnitts) mindestens ein, zumindest teilweise entlang einer Umfangsrichtung umlaufendes und sich in einer radialen Richtung erstreckendes erstes Anschlagelement angeordnet ist. Die Mutter ist über das erste Ende auf dem Bolzen angeordnet und gegen die Anschlagfläche verschraubt.

Insbesondere ist der Körper Bestandteil einer Sanitärarmatur, wobei ein über die Mutter in die Verbindungsanordnung eingeleitetes Anzugsdrehmoment über einen Kunststoffkörper der Sanitärarmatur aufzunehmen ist, wobei das Grenzdrehmoment auf einen Wert von höchstens 20 Newtonmeter begrenzt ist.

Das Grenzdrehmoment beträgt insbesondere zwischen 10 und 20 Newtonmeter, bevorzugt zwischen 10 und 15 Newtonmeter.

Die Ausführungen zu dem Verfahren sind insbesondere auf die Verbindungsanordnung und die Mutter übertragbar und umgekehrt.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung. Soweit ein Bauteil mehrfach vorkommen kann ("mindestens ein"), kann die Beschreibung zu einem dieser Bauteile für alle oder einen Teil der Mehrzahl dieser Bauteile gleichermaßen gelten, dies ist aber nicht zwingend.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
- Fig. 1:: eine Armatur mit einer bekannten Verbindungsanordnung in einer Seitenansicht im Schnitt;
- Fig. 2:: eine Mutter der Verbindungsanordnung in einer Seitenansicht im Schnitt;
- Fig. 3:: eine Mutter für eine Verbindungsanordnung in einer Seitenansicht im Schnitt;
- Fig. 4:: eine Verbindungsanordnung in einer Seitenansicht im Schnitt, unmittelbar nach Schritt a) des Verfahrens;
- Fig. 5:: die Verbindungsanordnung nach Fig. 4 in einer Seitenansicht im Schnitt, unmittelbar nach Schritt c) des Verfahrens;
- Fig. 6:: die Verbindungsanordnung nach Fig. 4 und 5 in einer Seitenansicht im Schnitt, unmittelbar nach einem weiteren Schritt c) des Verfahrens;
- Fig. 7:: die Verbindungsanordnung nach Fig. 4 bis 6 in einer Seitenansicht im Schnitt, wobei eine Durchmessererweiterung eine Anschlagfläche kontaktiert.

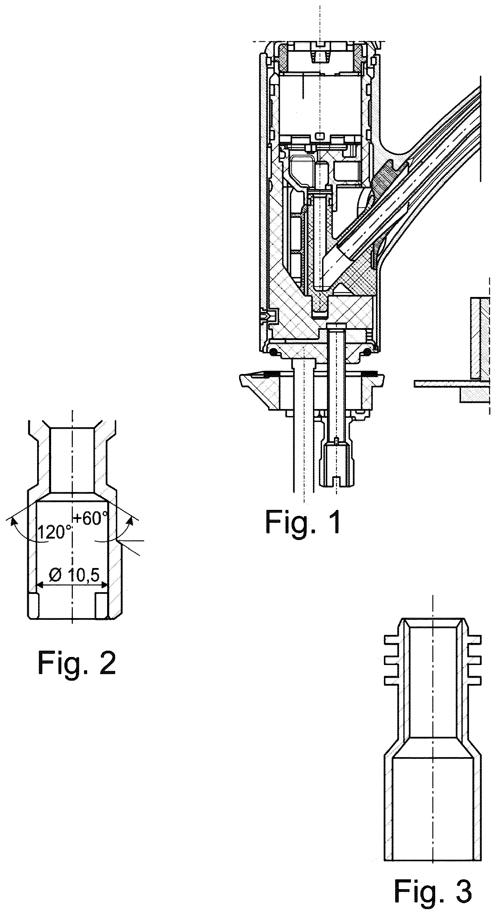

Die Fig. 1 zeigt eine Sanitärarmatur mit einer bekannten Verbindungsanordnung 1 in einer Seitenansicht im Schnitt. Fig. 2 zeigt eine Mutter der Verbindungsanordnung 1 in einer Seitenansicht im Schnitt. Die Fig. 1 und 2 werden im Folgenden gemeinsam beschrieben.

Die Verbindungsanordnung umfasst eine Mutter mit einem Innengewinde, einen Bolzen mit einem Außengewinde sowie einen Körper mit einer Anschlagfläche und einer Öffnung . Der Bolzen ist in der Öffnung angeordnet und erstreckt sich ausgehend von dem Körper durch die Anschlagfläche nach außen. Die Mutter erstreckt sich zwischen einem ersten Ende und einem zweiten Ende entlang einer axialen Richtung und weist ausgehend von dem ersten Ende einen hohlzylindrischen ersten Abschnitt mit dem Innengewinde auf.

Der Körper ist u. a. Bestandteil eines Wasserhahns. Der Bolzen ist in dem Körper fest angeordnet. Es sind nun Wasserhähne bekannt, bei denen sich der Bolzen bis hinein in einen Kunststoffadapter (Kunststoffkörper ) erstreckt, wobei der Bolzen z. B. über ein Metallelement mit Innengewinde, das in dem Kunststoffadapter angeordnet ist, mit dem Kunststoffadapter fest verbunden ist.

Zur Befestigung des Wasserhahns z. B. an einem Waschtisch wird der Wasserhahn an einer Oberseite des Waschtisches angeordnet, wobei sich der Bolzen durch eine Aussparung im Waschtisch hin zu einer Unterseite des Waschtisches erstreckt. Auf der Unterseite wird nun ein Gegenhalter auf dem Bolzen angeordnet und auf dem Bolzen abschließend die Mutter. Über ein Verschrauben der Mutter mit dem Bolzen wird der Gegenhalter gegen die Unterseite des Waschtisches und der Wasserhahn gegen die Oberseite des Waschtisches gepresst, so dass eine Befestigung des Wasserhahns realisiert ist.

Bei der Verschraubung der Mutter wird ein Anzugsdrehmoment über den Bolzen (und das Metallelement ) in den Kunststoffkörper eingeleitet. Dabei kann der Kunststoffkörper beschädigt werden, wenn ein zulässiges Anzugsdrehmoment überschritten wird.

Fig. 3 zeigt eine Mutter mit einem Innengewinde für eine Verbindungsanordnung in einer Seitenansicht im Schnitt. Die Mutter erstreckt sich zwischen einem ersten Ende und einem zweiten Ende entlang einer axialen Richtung und weist ausgehend von dem ersten Ende einen hohlzylindrischen ersten Abschnitt mit dem Innengewinde auf, wobei an einer zylindrischen Außenumfangsfläche mindestens ein, zumindest teilweise entlang einer Umfangsrichtung umlaufendes und sich in einer radialen Richtung erstreckendes ringförmiges erstes Anschlagelement angeordnet ist. Das erste Anschlagelement ist entlang der axialen Richtung beabstandet von dem ersten Ende angeordnet.

An der Außenumfangsfläche und entlang der axialen Richtung beabstandet von dem ersten Anschlagelement ist ein zweites Anschlagelement und nachfolgend ein weiteres (zweites) Anschlagelement angeordnet.

Die Mutter weist an der Außenumfangsfläche entlang der axialen Richtung beabstandet von dem nächstliegenden (dem weiteren zweiten) Anschlagelement und hin zum zweiten Ende eine Durchmessererweiterung auf.

Zwischen dem ersten Abschnitt (bzw. der Durchmessererweiterung ) und dem zweiten Ende ist ein Abschnitt angeordnet, über den ein Anzugsdrehmoment auf die Mutter aufgebracht werden kann.

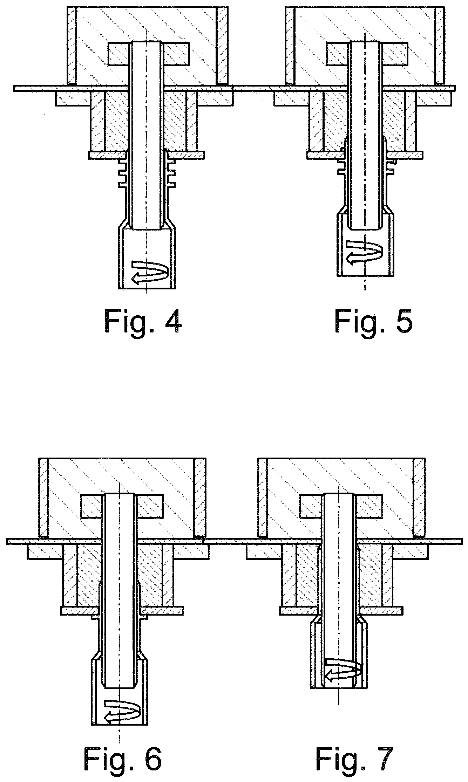

Fig. 4 zeigt eine Verbindungsanordnung in einer Seitenansicht im Schnitt, unmittelbar nach Schritt a) des Verfahrens. Fig. 5 zeigt die Verbindungsanordnung nach Fig. 4 in einer Seitenansicht im Schnitt, unmittelbar nach Schritt c) des Verfahrens. Fig. 6 zeigt die Verbindungsanordnung nach Fig. 4 und 5 in einer Seitenansicht im Schnitt, unmittelbar nach einem weiteren Schritt c) des Verfahrens. Fig. 7 zeigt die Verbindungsanordnung nach Fig. 4 bis 6 in einer Seitenansicht im Schnitt, wobei eine Durchmessererweiterung eine Anschlagfläche kontaktiert.

Die Fig. 4 bis 7 werden im Folgenden gemeinsam beschrieben. Auf die Ausführungen zu den Fig. 1 bis 3 wird verwiesen.

Die Verbindungsanordnung umfasst eine Mutter mit einem Innengewinde, einen Bolzen mit einem Außengewinde sowie einen Körper mit einer Anschlagfläche und einer Öffnung.

Der Körper ist Bestandteil einer Sanitärarmatur bzw. eines Wasserhahns. Der Körper umfasst hier mehrere Komponenten, z. B. einen Kunststoffkörper der Sanitärarmatur, ein Metallelement, das in dem Kunststoffkörper zur Verbindung mit dem Bolzen angeordnet ist, einen Gegenhalter sowie eine Anschlagfläche.

Der Bolzen ist in der Öffnung angeordnet und erstreckt sich ausgehend von dem Kunststoffkörper des Körpers, durch eine Aussparung in einem Waschtisch und durch einen Gegenhalter, sowie durch die Anschlagfläche nach außen. Die Mutter erstreckt sich zwischen einem ersten Ende und einem zweiten Ende entlang einer axialen Richtung und weist ausgehend von dem ersten Ende einen hohlzylindrischen ersten Abschnitt mit dem Innengewinde auf, wobei an einer zylindrischen Außenumfangsfläche drei, entlang einer Umfangsrichtung vollständig umlaufende und sich in einer radialen Richtung erstreckende Anschlagelemente angeordnet sind.

Der Körper ist Bestandteil einer Sanitärarmatur, wobei ein über die Mutter in die Verbindungsanordnung eingeleitetes Anzugsdrehmoment über einen Kunststoffkörper der Sanitärarmatur aufzunehmen ist.

Der Bolzen ist in dem Kunststoffkörper des Körpers, bzw. in dem Metallelement, fest angeordnet. Der Bolzen erstreckt sich bis hinein in den Kunststoffkörper, wobei der Bolzen z. B. über ein Metallelement mit Innengewinde, das in dem Kunststoffkörper angeordnet ist, mit dem Kunststoffkörper fest verbunden ist.

Gemäß Schritt a) des Verfahrens erfolgt ein Anordnen der Mutter über das erste Ende auf dem Bolzen und ein Verschrauben hin zur Anschlagfläche auf das Außengewinde mit höchstens einem ersten Drehmoment (z. B. höchstens 10 Newtonmeter, bevorzugt höchstens 5 Newtonmeter) bis zur Kontaktierung des ersten Anschlagelements mit der Anschlagsfläche (Fig. 4). Infolge der Kontaktierung ist ein zur weiteren Verschraubung erforderliches zweites Drehmoment höher als das erste Drehmoment, und wobei, wenn die Mutter mit mindestens dem zweiten Drehmoment weiter verschraubt wird und das zweite Drehmoment höher ist als ein durch das erste Anschlagelement definiertes Grenzdrehmoment, erfolgt gemäß Schritt b) des Verfahrens ein Wegbrechen des ersten Anschlagelement von der Außenumfangsfläche (zwischen Fig. 4 und 5).

An der Außenumfangsfläche und entlang der axialen Richtung beabstandet von dem ersten Anschlagelement ist ein zweites Anschlagelement angeordnet. Nach Schritt b) wird in einem Schritt c) die Mutter mit dem ersten Drehmoment weiter auf den Bolzen aufgeschraubt, bis das zweite Anschlagelement die Anschlagfläche kontaktiert (Fig. 5).

Das Verfahren setzt sich nach Schritt c) fort und setzt (dann) unmittelbar nach Schritt a) wieder ein. Es erfolgt ein Wegbrechen des jetzt zweiten Anschlagelements (zwischen Fig. 5 und 6) und ein weiteres Aufschrauben der Mutter, bis das weitere zweiten Anschlagelement die Anschlagfläche kontaktiert (Fig. 6).

Fig. 7 zeigt den Zustand, in dem auch das weitere zweite Anschlagelement weggebrochen ist und ein weiteres Aufschrauben der Mutter erfolgt, bis die Durchmessererweiterung die Anschlagfläche kontaktiert.

Das erste Ende verschiebt sich infolge der Verschraubung über die Öffnung sukzessive in den Gegenhalter des Körpers hinein.

Mit dem Verfahren kann mit jedem Anschlagelement ein maximal zulässiges Grenzdrehmoment definiert werden, so dass dem die Verbindungsanordnung herstellendem Monteur ein maximales Anzugsdrehmoment angezeigt wird.

## Patentansprüche

1. Verfahren zur Herstellung einer Verbindungsanordnung mit einer Drehmomentbegrenzung, wobei die Verbindungsanordnung zumindest eine Mutter mit einem Innengewinde, einen Bolzen mit einem Außengewinde sowie einen Körper mit einer Anschlagfläche und einer Öffnung umfasst; wobei der Bolzen in der Öffnung angeordnet ist und sich ausgehend von dem Körper durch die Anschlagfläche nach außen erstreckt; wobei die Mutter sich zwischen einem ersten Ende und einem zweiten Ende entlang einer axialen Richtung erstreckt und ausgehend von dem ersten Ende einen hohlzylindrischen ersten Abschnitt mit dem Innengewinde aufweist, wobei an einer zylindrischen Außenumfangsfläche mindestens ein, zumindest teilweise entlang einer Umfangsrichtung umlaufendes und sich in einer radialen Richtung erstreckendes erstes Anschlagelement angeordnet ist; wobei das Verfahren zumindest die folgenden Schritte umfasst:
a) Anordnen der Mutter über das erste Ende auf dem Bolzen und verschrauben hin zur Anschlagfläche auf das Außengewinde mit höchstens einem ersten Drehmoment bis zur Kontaktierung des ersten Anschlagelements mit der Anschlagsfläche,
wobei infolge der Kontaktierung ein zur weiteren Verschraubung erforderliches zweites Drehmoment höher ist als das erste Drehmoment, und wobei, wenn die Mutter mit mindestens dem zweiten Drehmoment weiter verschraubt wird und das zweite Drehmoment höher ist als ein durch das erste Anschlagelement definiertes Grenzdrehmoment
b) Wegbrechen des ersten Anschlagelements von der Außenumfangsfläche.

2. Verfahren nach Patentanspruch 1, wobei an der Außenumfangsfläche und entlang der axialen Richtung beabstandet von dem ersten Anschlagelement ein zweites Anschlagelement angeordnet ist; wobei nach Schritt b) in einem Schritt c) die Mutter mit dem ersten Drehmoment weiter auf den Bolzen aufgeschraubt wird, bis das zweite Anschlagelement die Anschlagfläche kontaktiert.

3. Verfahren nach Patentanspruch 2, wobei sich das Verfahren nach Schritt c) fortsetzt und unmittelbar nach Schritt a) einsetzt.

4. Verfahren nach einem der vorhergehenden Patentansprüche, wobei sich das erste Ende infolge der Verschraubung über die Öffnung sukzessive in den Körper hinein verschiebt.

5. Verfahren nach einem der vorhergehenden Patentansprüche, wobei die Mutter an der Außenumfangsfläche entlang der axialen Richtung beabstandet von dem nächstliegenden Anschlagelement und hin zum zweiten Ende eine Durchmessererweiterung aufweist, so dass bei Kontaktierung der Anschlagfläche mit der Durchmessererweiterung ein höheres Drehmoment als das Grenzdrehmoment zur weiteren Verschraubung erforderlich ist.

6. Mutter mit einem Innengwinde, wobei sich die Mutter zwischen einem ersten Ende und einem zweiten Ende entlang einer axialen Richtung erstreckt und ausgehend von dem ersten Ende einen hohlzylindrischen ersten Abschnitt mit dem Innengewinde aufweist, wobei an einer zylindrischen Außenumfangsfläche mindestens ein, zumindest teilweise entlang einer Umfangsrichtung umlaufendes und sich in einer radialen Richtung erstreckendes erstes Anschlagelement angeordnet ist, wobei das mindestens eine erste Anschlagelement so ausgeführt ist, dass es bei Kontaktieren einer Anschlagfläche und Überschreiten eines Grenzdrehmoments von höchstens 20 Newtonmeter von der Außenumfangfläche abschert.

7. Mutter nach Patentanspruch 6, wobei das erste Anschlagelement entlang der axialen Richtung beabstandet von dem ersten Ende angeordnet ist.

8. Mutter nach einem der vorhergehenden Patentansprüche 6 und 7, wobei an der Außenumfangsfläche und entlang der axialen Richtung beabstandet von dem ersten Anschlagelement ein zweites Anschlagelement angeordnet ist.

9. Mutter nach einem der vorhergehenden Patentansprüche 6 bis 8, wobei die Mutter an der Außenumfangsfläche entlang der axialen Richtung beabstandet von dem nächstliegenden Anschlagelement und hin zum zweiten Ende eine Durchmessererweiterung aufweist.

10. Verbindungsanordnung mit einer Drehmomentbegrenzung, zumindest umfassend eine Mutter nach einem der vorhergehenden Patentansprüche 6 bis 9, einen Bolzen mit einem Außengewinde sowie einen Körper mit einer Anschlagfläche und einer Öffnung; wobei der Bolzen in der Öffnung angeordnet ist und sich ausgehend von dem Körper durch die Anschlagfläche nach außen erstreckt; wobei die Mutter sich zwischen einem ersten Ende und einem zweiten Ende entlang einer axialen Richtung erstreckt und ausgehend von dem ersten Ende einen hohlzylindrischen ersten Abschnitt (mit dem Innengewinde aufweist, wobei an einer zylindrischen Außenumfangsfläche mindestens ein, zumindest teilweise entlang einer Umfangsrichtung umlaufendes und sich in einer radialen Richtung erstreckendes erstes Anschlagelement angeordnet ist, wobei die Mutter über das erste Ende auf dem Bolzen angeordnet ist und gegen die Anschlagfläche verschraubt ist.

11. Verbindungsanordnung nach Patentanspruch 10, wobei der Körper Bestandteil einer Sanitärarmatur ist, wobei ein über die Mutter in die Verbindungsanordnung eingeleitetes Anzugsdrehmoment über einen Kunststoffkörper der Sanitärarmatur aufzunehmen ist, wobei das Grenzdrehmoment auf einen Wert von höchstens 15 Newtonmeter begrenzt ist.

## Claims

1. A method for making a connection assembly with torque limitation, wherein the connection assembly comprises at least one nut with an internal thread, a bolt with an external thread, and a body with a stop surface and an opening; wherein the bolt is arranged in the opening and, starting from the body, extends outwardly through the stop surface; wherein the nut extends between a first end and a second end along an axial direction and, starting from the first end, has a hollow cylindrical first portion with the internal thread, wherein at least one first stop element at least partially running circumferentially along a circumferential direction and extending in a radial direction is arranged on a cylindrical outer circumferential surface; wherein the method comprises at least the following steps:
a) arranging the nut via the first end on the bolt and screwing it towards the stop surface onto the external thread with at most a first torque until the first stop element comes into contact with the stop surface,
wherein, as a result of the contacting, a second torque required for further screwing is higher than the first torque, and wherein, when the nut is further screwed with at least the second torque and the second torque is higher than a limit torque defined by the first stop element
b) breaking off the first stop element from the outer circumferential surface.

2. The method according to claim 1, wherein a second stop element is arranged spaced apart from the first stop element on the outer circumferential surface and along the axial direction; wherein after step b) in a step c) the nut is screwed further onto the bolt with the first torque until the second stop element comes into contact with the stop surface.

3. The method according to claim 2, wherein the method continues after step c) and starts immediately after step a).

4. The method according to any one of the preceding claims, wherein as a result of the screwing, the first end is successively displaced into the body via the opening.

5. The method according to any one of the preceding claims, wherein the nut has a diametrical widening on the outer circumferential surface along the axial direction spaced apart from the nearest stop element and towards the second end such that when the stop surface comes into contact with the diametrical widening, a higher torque than the limit torque is required for further screwing.

6. A nut with an internal thread, wherein the nut extends between a first end and a second end along an axial direction and, starting from the first end, has a hollow cylindrical first portion with the internal thread, wherein at least one first stop element at least partially running circumferentially along a circumferential direction and extending in a radial direction is arranged on a cylindrical outer circumferential surface, wherein the at least one first stop element is designed such that it is sheared off from the outer circumferential surface when it comes into contact with a stop surface and exceeds a limit torque of at most 20 newton meters.

7. The nut according to claim 6, wherein the first stop element is arranged spaced apart from the first end along the axial direction.

8. The nut according to any one of the preceding claims 6 and 7, wherein a second stop element is arranged spaced apart from the first stop element on the outer circumferential surface and along the axial direction.

9. The nut according to any one of the preceding claims 6 to 8, wherein the nut has a diametrical widening on the outer circumferential surface along the axial direction spaced apart from the nearest stop element and towards the second end.

10. A connection assembly with a torque limitation, at least comprising a nut according to any one of the preceding claims 6 to 9, a bolt with an external thread, and a body with a stop surface and an opening; wherein the bolt is arranged in the opening and, starting from the body, extends outwardly through the stop surface; wherein the nut extends between a first end and a second end along an axial direction and, starting from the first end, has a hollow cylindrical first portion with the internal thread, wherein at least one first stop element at least partially running circumferentially along a circumferential direction and extending in a radial direction is arranged on a cylindrical outer circumferential surface, wherein the nut is arranged on the bolt via the first end and is screwed against the stop surface.

11. The connection assembly according to claim 10, wherein the body is part of a sanitary fitting, wherein a tightening torque introduced into the connection assembly via the nut is to be absorbed via a plastic body of the sanitary fitting, wherein the limit torque is limited to a value of at most 15 newton meters.

## Revendications

1. Procédé, destiné à créer un ensemble d'accouplement, doté d'une limitation du couple, l'ensemble d'accouplement comprenant au moins un écrou pourvu d'un taraudage, un boulon pourvu d'un filetage ainsi qu'un corps pourvu d'une surface de butée et d'un orifice ; le boulon étant placé dans l'orifice et s'étendant en partant du corps à travers la surface de butée vers l'extérieur ; l'écrou s'étendant entre une première extrémité et une deuxième extrémité le long d'une direction axiale et en partant de la première extrémité, comportant un premier tronçon cylindrique creux, pourvu du taraudage, sur une surface circonférentielle extérieure cylindrique étant placé au moins un premier élément de butée, circulant au moins partiellement le long d'une direction circonférentielle et s'étendant dans une direction radiale ; le procédé comprenant au moins les étapes suivantes, consistant à :
a) placer l'écrou par-dessus la première extrémité sur le boulon et visser vers la surface de butée sur le filetage, avec au plus un premier couple jusqu'à ce que le premier élément de butée entre en contact avec la surface de butée,
suite à la mise en contact, un deuxième couple requis pour poursuivre le vissage étant supérieur au premier couple, et lorsque l'on continue de visser l'écrou avec au moins le deuxième couple et le deuxième couple est supérieur à un couple limité définit par le premier élément de butée,
b) dégager par rupture le premier élément de butée de la surface circonférentielle extérieure.

2. Procédé selon la revendication 1, sur la surface circonférentielle extérieure et le long de la direction axiale, un deuxième élément de butée étant placé avec un écart par rapport au premier élément de butée ; après l'étape b), dans une étape c) le vissage de l'écrou sur le boulon étant poursuivi avec le deuxième couple, jusqu'à ce que le deuxième élément de butée entre en contact avec la surface de butée.

3. Procédé selon la revendication 2, le procédé se poursuivant après l'étape c) et s'engageant directement après l'étape a).

4. Procédé selon l'une quelconque des revendications précédentes, suite au vissage, la première extrémité se déplaçant successivement à l'intérieur du corps, par l'intermédiaire de l'orifice.

5. Procédé selon l'une quelconque des revendications précédentes, l'écrou comportant sur la surface circonférentielle extérieure, le long de la direction axiale, avec un écart par rapport à l'élément de butée le plus proche et vers la deuxième extrémité un élargissement de diamètre, de sorte que lorsque la surface de butée entre en contact avec l'élargissement de diamètre, le couple requis pour la poursuite du vissage est supérieur au couple limite.

6. Ecrou, pourvu d'un taraudage, entre une première extrémité et une deuxième extrémité, l'écrou s'étendant le long d'une direction axiale, et en partant de la première extrémité, comportant un premier tronçon cylindrique creux, pourvu du taraudage, sur une surface circonférentielle extérieure cylindrique étant placé au moins un premier élément de butée, circulant au moins partiellement le long d'une direction circonférentielle et s'étendant dans une direction radiale, l'au moins un premier élément de butée étant réalisé de telle sorte que lorsqu'il entre en contact avec une surface de butée et en cas de dépassement d'un couple limite d'un maximum de 20 Newton-mètres, il se cisaille de la surface circonférentielle extérieure.

7. Ecrou selon la revendication 6, le premier élément de butée étant placé le long de la direction axiale, avec un écart par rapport à la première extrémité.

8. Ecrou selon l'une quelconque des revendications 6 et 7 précédentes, sur la surface circonférentielle extérieure et le long de la direction axiale, un deuxième élément de butée étant placé avec un écart par rapport au premier élément de butée.

9. Ecrou selon l'une quelconque des revendications 6 à 8 précédentes, l'écrou comportant un élargissement de diamètre, sur la surface circonférentielle extérieure, le long de la direction axiale, avec un écart par rapport à l'élément de butée le plus proche et en direction de la deuxième extrémité.

10. Ensemble d'accouplement, doté d'une limitation du couple, comprenant au moins un écrou selon l'une quelconque des revendications 6 à 9 précédentes, un boulon pourvu d'un filetage, ainsi qu'un corps pourvu d'une surface de butée et d'un orifice ; le boulon étant placé dans l'orifice et en partant du corps, s'étendant à travers la surface de butée vers l'extérieur ; l'écrou s'étendant entre une première extrémité et une deuxième extrémité le long d'une direction axiale, et en partant de la première extrémité, comportant un premier tronçon cylindrique creux, (pourvu du taraudage) sur une surface circonférentielle extérieure cylindrique étant placé au moins un premier élément de butée, circulant au moins partiellement le long d'une direction circonférentielle et s'étendant dans une direction radiale, l'écrou étant placé par-dessus la première extrémité sur le boulon et étant vissé contre la surface de butée.

11. Ensemble d'accouplement selon la revendication 10, le corps étant une partie intégrante d'une robinetterie sanitaire, un couple de vissage introduit dans l'ensemble d'accouplement par l'intermédiaire de l'écrou devant être repris par un corps en matière plastique de la robinetterie sanitaire, le couple limite étant limité à une valeur d'un maximum de 15 Newton-mètres.
